# EUROPÄISCHE PATENTANMELDUNG

(11) **EP 3 905 160 A1**
(43) Veröffentlichungstag der Anmeldung: **03.11.2021**
(21) Anmeldenummer: 21169957.4
(22) Anmeldetag: 22.04.2021
(51) Int. Cl.: G06Q 10/08, G06Q 50/28

(54) **LOGISTISCHES VERFAHREN FÜR ZU VERKAUFENDE WAREN UND ZU VERSENDENDE PAKETE, PAKET-ANNAHME-STATION SOWIE WAREN-VERKAUFS-FILIALE ZUR DURCHFÜHRUNG DIESES VERFAHRENS**

(30) Priorität: 27.04.2020 DE 102020111395
(71) Anmelder: Lidl Dienstleistung GmbH & Co. KG, 74206 Bad Wimpfen (DE)
(72) Erfinder: OPPITZ, Matthias, 74206 Bad Wimpfen (DE); ENGEL, Rene, 74206 Bad Wimpfen (DE); EBERHARD, Dominik, 74206 Bad Wimpfen (DE)
(74) Vertreter: Weickmann & Weickmann PartmbB

(57) **Zusammenfassung**

Die Erfindung betrifft die logistische Verknüpfung von Paket-Strömen mit Waren-Strömen durch Positionierung von gemeinsamen Paket-Annahme-Stationen (gPAS) an oder in Waren-Verkaufs-Filialen (VVVF), in denen die Waren (W) verkauft werden.

## Beschreibung

### I. Anwendungsgebiet

Die Erfindung betrifft einerseits die logistische Handhabung von Waren, die an Waren-Verkaufs-Filialen geliefert werden müssen und dort an Kunden verkauft werden und andererseits die logistische Handhabung von Paketen, insbesondere Paket-Rückläufern, die von den gleichen Kunden an Empfänger versandt werden.

### II. Technischer Hintergrund

Diese beiden Produktströme sind heute weitestgehend getrennt:
Waren-Verkaufs-Filialen wie Supermärkte oder Discounter, in denen Waren an Endverbraucher verkauft werden, werden in aller Regel von gebiets-spezifischen Waren-Zentral-Lagern an aus mittels Transport-Fahrzeugen, in der Regel LKWs
- weshalb die Lieferfahrzeuge im Rahmen dieser Anmeldung nur noch mit der Kurzform LKW bezeichnet werden - mit Waren beliefert, die auf ihrer Rückfahrt zum Waren-Zentral-Lager jedoch in der Regel nicht ganz leer zurückfahren, sondern zum Waren-Zentral-Lager Transportgut zurückbringen können, etwa
- in der Waren-Verkaufs-Filiale zurückgegebene Verpackungen, insbesondere leere bepfandete Dosen und Flaschen,
- in der Waren-Verkaufs-Filiale gesammelte und insbesondere zu Ballen verpresste Umverpackungen,
- Waren-Rückläufer, insbesondere in Form von zurückgegebenen Waren, Restposten von Waren oder Warenbestände, die in andere Waren-Verkaufs-Filialen verbracht werden sollen.

Pakete, die insbesondere aufgrund des Online-Handels transportiert werden müssen, werden von unterschiedlichen Paket-Logistikern über deren gebietsspezifische Paket-Zentral-Lager mittels Lieferfahrzeugen zu den Kunden, in der Regel Endverbrauchern, gebracht. Paket-Rückläufer - bei manchen Waren-Gruppen beträgt der Anteil bekanntermaßen 50% und mehr-werden vom Empfänger des Pakets = Versender des Rückläufers zu einer Paket-Annahme-Station - meist des gleichen Paket-Logistikers, der ihm das Paket zugestellt hat - gebracht und es wird von dort mittels einem der Lieferfahrzeuge des Paket-Logistiker zum Paket-Zentral-Lager gebracht und geht von dort an den Empfänger, meist den ursprünglichen Versender des Paketes.

Bei den meisten ursprünglichen Versendern ist der Rücktransport des Paketes kostenlos. Dennoch muss der Kunde für das Aufgeben des Paket-Rückläufers zur logistikerspezifischen Paket-Annahme-Station dieses Paket-Logistikers gehen, um das Paket dort aufzugeben, denn die Paket-Logistiker betreiben bisher keine gemeinsamen Paketannahme-Stationen.

Zum einen sind diese logistikerspezifischen Paketannahme-Stationen zum Teil relativ weit vom Kunden entfernt, des Weiteren haben sie oft sehr spezifische Öffnungszeiten und je nach Paket-Annahme-Station herrschen dort unter Umständen lange Wartezeiten für den aufgebenden Kunden.

Des Weiteren ist die Annahme-Kapazität und/oder Lager-Kapazität für dort abgegebene Pakete meist sehr begrenzt und oft erschöpft.

Das Gleiche gilt für den Kunden erst recht, wenn er keinen Paket-Rückläufer aufgeben will, sondern ein selbst erstelltes Paket, ein sogenanntes Primär-Paket, versenden will, da er dann den Versand zusätzlich auch bezahlen muss, entweder an der Logistikerspezifischen Paket-Annahme-Station oder, am besten vorher, online.

Um das Problem der bei Paket-Auslieferung zu Hause nicht anwesenden Kunden zu lösen, gibt es Paket-Auslieferungs-Stationen in Form von Schließfach-Anlagen, in denen das Paket für den Kunden hinterlegt wird und der es von dort abholen kann. Diese Paket-Auslieferungs-Stationen befinden sich in Gebäuden oder auch im Freien, wobei eine gute Erreichbarkeit für den Kunden, vor allem nach wie vor auch mit dem Auto, wichtig ist.

Einige dieser Paket-Auslieferungs-Stationen sind auch für die Annahme von Paketen, insbesondere Rückläufer-Paketen ausgestattet, selten bis nie jedoch für die Annahme von Primär-Paketen.

Die bisher geübte Verbindung zwischen diesen Logistik-Strömen besteht lediglich darin, dass auf Parkplätzen von Waren-Verkaufs-Filialen wie Supermärkten oder Discountern solche mannlosen Paket-Auslieferungs-Stationen stehen, meist jedoch relativ weit entfernt vom Verkaufs-Gebäude, da für die Waren-Verkaufs-Filialen die gebäudenahen Bereiche seines Parkgeländes als Parkplätze wichtig sind für seine Kundenbindung.

Gerade bei Dunkelheit ist es für den Paket-Kunden nicht angenehm, in einem abgelegenen Teil des Geländes, die zum Teil schlecht einsehbare Paket-Station für die Ausgabe oder Annahme seines Paketes anzufahren, und zusätzlich kann er dies oft nur während der Öffnungszeiten der Waren-Verkaufs-Filiale, da nur zu diesen Zeiten das Parkgelände der Waren-Verkaufs-Filiale geöffnet ist.

Ferner ist eine solche Paket-Station wegen der Anordnung im Freien, trotz thermischer Isolierung, für temperaturempfindliche Waren nur begrenzt geeignet.

Der Paket-Kunde muss also wissen,
- bei welcher Waren-Verkaufs-Filiale sich eine Paket-Auslieferungs-Station befindet,
- ob sie als Paket-Annahme-Station ausgebildet ist,
- ob die Paket-Annahme-Station aktuell noch über Annahmekapazität verfügt,
- von welchem Logistiker diese Paket-Station betrieben wird,
- wo auf dem Parkgelände sich die Paket-Station befindet und
- zu welchen Zeiten die Paket-Station zugänglich ist.

Diese logistikerspezifischen Paket-Stationen werden vom Logistiker, also dessen Lieferfahrzeugen direkt befüllt und entleert.

### III. Darstellung der Erfindung

### a) Technische Aufgabe

Es ist daher die Aufgabe gemäß der Erfindung, die Logistikströme von Waren und Paketen zu koppeln, um einerseits dem Kunden einen Handhabungs-Vorteil zu bieten und andererseits den logistischen Aufwand in Form von Fahrzeug-Bewegungen und Vorhalten von Paket-Stationen, vor allem Paketannahme-Stationen, zu reduzieren.

### b) Lösung der Aufgabe

Diese Aufgabe wird durch die Merkmale der Ansprüche 1, 14 und 19 gelöst. Vorteilhafte Ausführungsformen ergeben sich aus den Unteransprüchen.

Hinsichtlich des Verfahrens werden erfindungsgemäß die Logistikströme von zu verkaufenden Waren einerseits und zu versendenden Paketen andererseits gekoppelt:
Waren, die in Waren-Verkaufs-Filialen an Kunden verkauft werden sollen, werden über Waren-Zentral-Lager an die in deren Verteil-Gebiet liegenden Waren-Verkaufs-Filialen verteilt, also mittels Waren-LKWs vom Waren-Zentral-Lager zu den einzelnen Waren-Verkaufs-Filialen transportiert.

Diese Waren-LKWs transportieren auf der Rückfahrt weitaus weniger Material, unter anderem leere Verpackungen.

Andererseits werden Pakete von Kunden zur Versendung an Paket Annahme-Stationen aufgegeben, und von dort zu einem Paket-Zentral-Lager eines Paket-Logistikers transportiert. Dabei handelt es sich zu einem relativ hohen Prozentsatz um Rückläufer-Pakete, in denen per Paket erhaltene, meist online erworbene, Ware an den Versender zurückgesandt wird.

Das Koppeln dieser Logistikströme erfolgt erfindungsgemäß dadurch, dass diese Pakete vom Kunden nicht an einer Logistikerspezifischen Paket-Annahme-Station aufgegeben werden, sondern an einer sogenannten "gemeinsamen Paket-Annahme-Station", bei der unterschiedliche Pakete aufgegeben werden können, die jeweils von einem bestimmten von mehreren verschiedenen, zur Auswahl stehenden, Logistikern transportiert werden sollen, und wofür diese gemeinsamen Paket-Annahme-Stationen in oder nahe an einer Waren-Verkaufs-Filiale, also zumindest auf deren Gelände mit den Kunden-Parkplätzen, positioniert wird.

Der Kunde kann also die meisten oder alle seiner Pakete - bei Rückläufer-Paketen ist meist vorgegeben, über welchen Logistiker sie zurücktransportiert werden müssen - bei dieser gemeinsamen Paket-Annahme-Station aufgeben, was für ihn eine Reihe von Vorteilen hat:
- Der Kunde spart zusätzlichen Weg und Zeit für das Abgeben der Pakete, insbesondere seiner Rückläufer-Pakete, zu einer jeweils separaten ihm vorgegebenen, Logistikerspezifischen Paket-Annahme-Station und er kann an der gleichen Stelle, also auf dem gleichen Gelände, in der Waren-Verkaufs-Filiale seine Waren-Einkäufe durchführen,
- diese gemeinsame Paket-Annahme-Station ist für ihn gut anfahrbar, da auf dem Gelände der Waren-Verkaufs-Filiale in aller Regel eine ausreichende Anzahl von Parkplätzen zur Verfügung steht,
- er vermeidet die an den Logistikerspezifischen Annahme-Stationen häufigen langen Wartezeiten sowie das Risiko, dass am Ende sein Paket dort doch nicht angenommen wird, da momentan die Annahme-Kapazität dieser Logistikerspezifischen Annahme-Station erschöpft ist,
- er ist in seiner Tagesplanung wesentlich flexibler, da ihm für die Rückgabe des Paketes oder Aufgabe eines Primär-Paketes an der gemeinsamen Paket-Annahme-Station die im bekannten und langen, kundenfreundlichen Öffnungszeiten der Waren-Verkaufs-Filiale zur Verfügung stehen, während ihm die Logistikerspezifischen Paket-Annahme-Stationen für jede Station nur zu ganz spezifischen Öffnungszeiten zur Verfügung steht, die noch dazu wesentlich kürzer sind.

Die an der gemeinsamen Paket-Annahme-Station aufgegebenen Pakete werden nach den verschiedenen Paket-Logistikern sortiert und an diese übergeben. Die Pakete werden zu den Paket-Zentral-Lägern der einzelnen Paket-Logistiker transportiert.

Dies kann auf unterschiedliche Art und Weise erfolgen:
Vorzugsweise werden die Pakete zunächst von der Waren-Verkaufs-Filiale, an der sich die gemeinsame Paket-Annahme-Station befunden hat, zu einem Waren-Zentral-Lagern transportiert, und zwar mittels eines Waren-LKWs, der die Waren-Verkaufs-Filiale ohnehin anfährt zur Lieferung von Waren, und die Pakete auf seiner Rückfahrt zum Waren-Zentral-Lager mitnehmen kann.

Dabei kann das Sortieren der Pakete zu unterschiedlichen Zeitpunkten dieses Ablaufes erfolgen, spätestens jedoch im Waren-Zentral-Lager, gegebenenfalls auch schon früher, eventuell bereits schon an der gemeinsamen Paket-Annahme-Station, oder zu einem Zeitpunkt dazwischen.

Von den Waren-Zentral-Lagern werden die Pakete sortiert nach den einzelnen Logistikern zu den Paket-Zentral-Lagern der einzelnen Logistiker transportiert, was aber dann vorzugsweise durch den Logistiker erfolgt, also mittels dessen Paket-LKWs.

Wenn die Pakete bereits in den Waren-Verkaufs-Filialen, also an den jeweiligen dortigen gemeinsamen Paket-Annahme-Stationen, nach Paket-Logistikern sortiert werden, könnten diese auch von dort direkt zu den Paket-Zentral-Lagern der Paket-Logistiker transportiert werden, dann jedoch vorzugsweise mittels der Paket-Lieferwägen oder Paket-LKWs des Paket-Logistikers.

Dadurch würde der Umweg über die Waren-Zentral-Lager und der dadurch eintretende Zeitverlust vermieden, der Einsammel-Aufwand für den Paket-Logistiker wäre jedoch höher, da er ja eine wesentlich höhere Anzahl von Waren-Verkaufs-Filialen anfahren muss gegenüber der sehr viel geringeren Anzahl von Waren-Zentral-Lagern. Zusätzlich könnte die Kapazität der Waren-LKWs auf deren Rückfahrt dadurch nicht ausgenutzt werden.

In beiden Fällen bestehen jedoch die Vorteile für den Paket-Logistiker darin, dass sein Aufwand zum Einsammeln der aufgegebenen Pakete sinkt, und er eventuell sogar mit einer geringeren Anzahl von ihm selbst betriebenen, logistikerspezifischen Paket-Annahme-Stationen auskommt, was seine Betriebskosten drastisch senkt.

Für den Betreiber der Waren-Verkaufs-Filialen bietet diese Vorgehensweise den Vorteil, dass er dadurch die Bindung zu seinen Kunden steigern kann, die die Vorteile der gemeinsamen Paket-Annahme-Stationen an seinen Waren-Verkaufs-Filialen wegen ihrer Vorteile nutzen möchten.

Die Vorteile für diese drei Akteure lassen sich durch Zusatzmaßnahmen bei der Vorgangsweise weiter steigern:
Indem die gemeinsame Paket-Annahme-Station teilweise oder insbesondere vollständig automatisiert ist und insbesondere mannlos betrieben werden kann, benötigt der Betreiber, der in aller Regel auch der Betreiber der dortigen Waren-Verkaufs-Filiale ist, kein oder kaum zusätzliches Personal.

Vor allem aber lässt sich dann die Anzahl der Annahme-Terminals in einer solchen gemeinsamen Paket-Annahme-Station sehr leicht an den Bedarf anpassen, sodass für den Kunden der Vorteil entsteht, dass er dort kaum oder überhaupt keine Wartezeiten beim Aufgeben seines Paketes zu befürchten hat.

Wenn der Kunde nach dem dortigen Aufgeben des Pakets einen Abgabe-Beleg in Papierform ausgegeben erhält oder auf sein Smartphone oder per mail übermittelt erhält, auf dem der Abgabe-Zeitpunkt und/oder der auf dem Paket angegebene Paket-Logistiker, der den weiteren Auslieferungsvorgang des Paketes durchführt, angegeben ist und/oder eine entsprechende Sendungs-Kennung, mit deren Hilfe die online Nachverfolgung des Paketes auf seinem Weg durch den Kunden möglich ist, kann der Kunde wie bei Aufgabe an einer Logistikerspezifischen Annahme-Station ebenfalls den Weg seines Paketes und dessen Auslieferung beim Empfänger verfolgen.

Da ein Teil der Pakete, insbesondere sogenannte Primär-Pakete, die der Kunde selbst erstellt hat und die keine Rückläufer-Pakete sind, vor dem Versand frankiert werden müssen, ist es für den Kunden vorteilhaft, wenn dieses Frankieren ebenfalls, vorzugsweise automatisiert, an der gemeinsamen Paket-Annahme-Station durchgeführt werden kann, insbesondere bargeldlos bezahlt werden kann, oder der Kunde das Entgelt für die Paket-Beförderung vorher online entrichten kann.

Der Kunde muss dann nicht einmal für solche Primär-Pakete eine mit Personal ausgestattete und meist mit Wartezeit und Anfahrweg verbundene, Logistiker-spezifische Annahmestation aufsuchen.

Da ihm gerade bei Primärpaketen der Paket-Logistiker nicht vorgegeben ist, kann der Kunde - spätestens an der gemeinsamen Paket-Annahme-Station - einen bestimmten Paket-Logistiker nach eigenem Ermessen auswählen, sei es in Abhängigkeit des für die einzelnen Paket-Logistiker meist unterschiedlichen Beförderung-Entgelts oder nach anderen Kriterien, beispielsweise der Qualität oder Geschwindigkeit der Beförderung und Auslieferung.

Vorzugsweise wird ihm jedoch zumindest das von den einzelnen Paket-Logistikern verlangte Beförderungs-Entgelt beim Aufgeben des Paketes an der gemeinsamen Paket-Annahme-Station vorher mitgeteilt, und der Kunde kann daraufhin die Auswahl des Paket-Logistikers treffen.

Dies ist ein Vorteil, der ihm bei der vorherigen Festlegung auf einen bestimmten Paket-Logistiker, indem er eine bestimmte Logistiker-spezifische Annahmestation aufsucht, nicht mehr geboten wird. Hierfür müsste er sich vorher online über beispielsweise die verschiedenen Beförderungs-Entgelte für sein konkretes Paket - die bei den einzelnen Logistikern von unterschiedlichen Parametern abhängen können - erkundigen und dann diese Entscheidung treffen.

Da sich auf dem aufgegebenen Paket entweder eine Kennung befindet, die den Paket-Logistiker wiedergibt, der das Paket transportieren soll, oder ein solcher Paket-Logistiker beim Aufgeben des Paketes an der Bedieneinheit vom Kunden eingegeben wird, besteht zum einen die Möglichkeit, dieses Paket automatisch, noch in der gemeinsamen Paket-Annahme-Station, einem für diesen Paket-Logistiker spezifischen Sammelbehälter zuzuführen.

Dies erspart das spätere, zum Beispiel erst in dem Waren-Zentral-Lager stattfindende, Sortieren der Pakete nach den einzelnen Paket-Logistikern und ermöglicht sogar die Abholung der Sammelbehälter durch die einzelnen Paket-Logistiker bereits in den einzelnen Waren-Verkaufs-Filialen.

Es besteht ferner die Möglichkeit, den Paket-Logistiker sehr zeitaktuell, beispielsweise jeden Tag oder mehrmals am Tag oder gar just-in time, über die Anzahl der in den einzelnen Waren-Verkaufs-Filialen oder in dem Verteil-Bereich eines Waren-Zentral-Lagers abgegebenen Pakete zu informieren, so dass er sich bei seinen logistischen Planungen darauf einstellen kann.

Sofern auf den Paketen bei der Aufgabe auch der Empfänger identifiziert, insbesondere gescannt, wird, können dem Paket-Logistiker auch die einzelnen Empfänger mitgeteilt werden, so dass der Paket-Logistiker beispielsweise eine auffällige Häufung von Empfängern sofort erkennen kann, was er ebenfalls bei den Planungen seiner zukünftigen Logistik mit berücksichtigen kann, oder was ihn auf beispielsweise einen gehäuften Rücklauf zu einem bestimmten Empfänger und damit vermutlich eines bestimmten Produktes sehr früh hinweisen kann.

Falls unter den angenommenen Paketen auch Paket-Rückläufer des online-Shops sind, der vom Betreiber der Waren-Verkaufs-Filialen betrieben wird, ist dieser über diese Paket-Rückläufer sehr früh informiert und kann auf beispielsweise gestiegene Anzahl reagieren, z.B. Qualitätsprüfungen veranlassen und/oder Produkt-Rückrufaktionen durchführen lassen.

Wenn bei der Annahme der Pakete auch die physikalischen Daten des Pakets ermittelt werden, wie beispielsweise Gewicht und/oder Abmessungen, insbesondere auch die Form, des Paketes, und diese zusätzlich dem Paket-Logistiker - oder im letztgenannten Fall dem Betreiber der Waren-Verkaufs-Filialen und des angegliederten Onlineshops - mitgeteilt wird, kann dieser daraus in vielen Fällen schließen, um welches Rückläufer-Produkt es sich in den jeweiligen Paketen handelt, und einen erhöhten Rücklauf eines bestimmten Produktes sehr früh feststellen und darauf reagieren.

Auch für die Planung der Transport-Kapazitäten ist die Kenntnis des Gewichts und/oder der Abmessungen, insbesondere gar der Form, der Pakete von Vorteil.

Um Auswertungsergebnisse aus den oben genannten Erkenntnissen verifizieren zu können, können zusätzlich Plausibilitätskontrollen, insbesondere an der gemeinsamen Paket-Annahme-Station, durchgeführt werden:
So kann beim Entnehmen eines gefüllten Sammelbehälters aus der Paket-Annahme-Station beispielsweise dessen Gewicht ermittelt werden, etwa indem der Sammelbehälter, der momentan im Einsatz ist, also in den die aufgegebenen Pakete nach Durchlaufen des Eingabe-Kanals hineinfallen, auf einer Waage angeordnet ist und ständig gewogen wird oder vorher die einzelnen Pakete beim Durchlauf.

Das Gewicht des entnommenen, gefüllten Sammelbehälters kann dann mit der Summe der Gewichte der aufgegebenen Pakete seit dem Einsetzen dieses Sammelbehälters in die Paket-Annahme-Station verglichen werden, und wenn es hierbei eine relevante Differenz gibt, lässt dies auf einen Funktionsfehler der Annahme-Station oder einen Diebstahl schließen, beispielsweise dahingehend, dass ein aufgegebenes Paket nicht in den Sammelbehälter gelangt ist.

Das gleiche kann bei Kontrolle des Füllvolumens des Sammelbehälters und Ermittlung des Volumens der aufgegebenen Pakete hinsichtlich der Volumina durchgeführt werden, ist jedoch stärker fehlerbehaftet, wenn die Pakete frei in den Sammelbehälter fallen und dadurch eine lose Schüttung mit mehr oder weniger großen Zwischenräumen bilden.

Bei Paket-Rückläufern tritt für den Kunden häufig das Problem auf, dass er zuhause nicht über die passenden Verpackungsmaterialien verfügt, um ein solches Paket wieder ordnungsgemäß verpackungstechnisch für den Rück-Versand fertigzustellen.

Für diesen Fall ist es für den Kunden angenehm, wenn ihm am Ort der gemeinsamen Paket-Annahme-Station das entsprechende Verpackungsmaterial zur Verfügung gestellt wird, beispielsweise Klebeband und/oder Packpapier und/oder Faltkartons in verschiedenen Größen, unabhängig davon ob ihm dies kostenlos oder vor allem bei ganzen Faltkartons gegen Bezahlung zur Verfügung gestellt werden.

Die Paket-Annahme-Station kann auch dazu benutzt werden, dass Kunden an die örtlichen Tafeln, die Lebensmittel oder Speisen an Bedürftige kostenlos ausgeben, spenden können:
Entweder in Form von Naturalien, indem der Kunde - vorzugsweise vorher in der Waren-Verkaufs-Filiale erworbene - Lebensmittel, bevorzugt vorher verpackt als Paket, in die Eingabe-Öffnung der gemeinsamen Paket-Annahme-Station legt und als Empfänger an der Bedieneinheit eine der dort zur Verfügung stehenden Tafeln auswählt, woraufhin die aufgegebene Ware automatisch in einem Spenden-Behälter deponiert wird.

Alternativ müssen diese Waren nicht unbedingt körperlich in die Eingabeöffnung gelegt werden, sondern der Kunde kann lediglich an der Bedieneinheit bestimmte Waren, die in der benachbarten Warren-Verkaufs-Filiale angeboten werden, als Spende an die Tafel deklarieren und an der Bedieneinheit bezahlen.

Eine Spende in dieser Form kann anschließend - dann meist manuell vom Personal der Waren-Verkaufs-Filiale - in den Spenden-Behälter für die Tafel im Pfand-Raum oder im Logistik-Raum eingelegt werden, oder der Tafel wird über diesen Betrag ein Einkaufs-Gutschein für die Waren-Verkaufs-Filiale zugestellt.

Da die gemeinsame Paket-Annahme-Station vorzugsweise vollautomatisch und damit mannlos funktioniert, und somit nicht der ständigen persönlichen Überwachung durch das Personal der Waren-Verkaufs-Filiale unterliegt, sollte eine automatische Überwachung der Paket-Annahme-Station vorgesehen werden, vor allem wenn sich diese in einer Außenwand des Gebäudes befindet, und damit selbst bei geschlossener Schranke am Geländeeingang von Unberechtigten außerhalb der Öffnungszeiten aufgesucht werden kann.

Zum einen könnte die Paket-Annahme-Station mit Bewegungsmeldern und/oder Beschleunigungssensoren ausgestattet werden, die ein unbefugtes, starkes Einwirken auf die Annahme-Station, beispielsweise den Versuch des Aufbrechens, erkennen und automatisch melden.

Vorzugsweise ist dann eine signaltechnische Verbindung mit der nächstgelegenen Polizeistation vorhanden, die in diesem Fall die gemeinsame Paket-Annahme-Station, also die entsprechende Waren-Verkaufs-Filiale, anfahren und kontrollieren kann.

Auch eine Überwachung des Bereiches an und unmittelbar vor der Annahme-Station ist in Erwägung zu ziehen, indem deren Aufnahmen ständig von Personal z.B. einer Sicherheitsfirma überwacht werden.

Die nächste Ausbaustufe der gemeinsamen Paket-Annahme-Station besteht darin, dass diese zusätzlich auch die Ausgabe von Paketen, die von Paket-Logistikern erhalten wurden, an den Kunden durchführen kann, wie an heute bereits bekannten Paket-Ausgabe-Stationen in Form von gesteuerten Schließfach-Systemen.

An einer solchen gemeinsamen Paket-Annahme-Station können zu diesem Zweck ebenfalls entsprechend gesteuerte Schließfächer vorhanden sein, in denen sich jeweils ein Paket für den Kunden befindet, so dass dem Kunden das entsprechende Schließfach automatisch geöffnet wird, sobald er seine Empfangsberechtigung für das darin liegende Paket an der Bedieneinheit nachgewiesen hat, beispielsweise durch Einlesen einer Empfangs-Bestätigung, die der Kunde per Mail erhalten hat und im ausgedruckten Zustand oder von seinem Smartphone durch den Scanner der Bedienung-Einheit einlesen lassen kann einschließlich darauf angeordneter Markierungen wie etwa eines QR-Codes.

Statt der bekannten gesteuerten Schließfächer kann dem Kunden bei Nachweis seiner Berechtigung das entsprechende Paket auch über den Eingabe-Kanal ausgegeben werden, indem der dortige Förderer in umgekehrter Richtung betrieben wird und ein im Inneren der gemeinsamen Paket-Annahme-Station aufgelegtes Paket an der Eingabe-Öffnung ausgehändigt wird.

Hinsichtlich eines automatischen Paket Annahme-Systems mit wenigstens einer gemeinsamen Paket-Annahme-Station umfasst diese eine Eingabe-Öffnung, an die sich vorzugsweise ein Eingabe-Kanal anschließt, sowie im Inneren der Station, also für den Kunden nicht mehr zugänglich - indem sich hinter der Eingabe-Öffnung eine durchgriff-Verhinderungs-Vorrichtung, also ein Durchgriff-Schutz, befindet - ein Sammelbehälter, in den die angenommenen Pakete, die den Eingabe-Kanal durchlaufen haben, automatisch abgelegt werden, insbesondere einfach hineinfallen.

Zu diesem Zweck ist eine Transportvorrichtung vorhanden, die das Paket entlang des Eingabe-Kanals bewegt, im einfachsten Fall eine Rutsche, vorzugsweise jedoch eine gesteuerte Transport-Vorrichtung wie etwa ein Förderband, welches von einer elektrischen oder elektronischen Steuerung der Annahme-Station gesteuert bewegt werden kann.

Ein solches Paket-Annahme- System, insbesondere jede einzelne Paket-Annahme-Station, umfasst ferner einen Scanner zum Lesen der auf dem Paket, insbesondere auf dessen Etikett, angegebenen Paket-Informationen, und zwar wenigstens der auf dem Paket vorhandenen Logistiker-Kennung, die den Logistiker angibt, der dieses Paket transportieren muss, und die dort vorzugsweise in Form eines QR-Codes oder eines Barcodes oder einer anderen optisch detektierbaren Markierung aufgebracht ist, vorzugsweise so oder so oft, dass die Logistiker-Kennung von allen Seiten des Paketes aus erkennbar ist, z.B. in Form eines transparenten, insbesondere umlaufenden Bandes für ein Erkennbarkeit über 360° des Umfanges des Paketes, indem das Band insbesondere fortlaufend mit der Logistiker-Kennung bedruckt ist..

Dies erspart es dem Kunden, den entsprechenden Paket-Logistiker manuell, beispielsweise über die Tastatur einer Bedieneinheit, einzugeben, was auch immer fehleranfällig ist.

Der Scanner ist dabei vorzugsweise im Verlauf des Eingabe-Kanals, also auf jeden Fall an oder hinter der Eingabe-Öffnung angeordnet, vorzugsweise an mehreren Stellen des Umfanges der Eingabeöffnung oder des Eingabe-Kanals, so dass eine solche Markierung gelesen werden kann, unabhängig davon, auf welcher sichtbaren Seite des Paketes sie sich befindet, abgesehen von der Unterseite.

Ein solcher Scanner kann stattdessen und/oder zusätzlich auch Bestandteil einer Bedien-Einheit sein, was jedoch erfordert, dass der Kunde das Paket mit dieser Markierung manuell an den Scanner hält.

Eine solche Bedieneinheit kann darüber hinaus einen Bildschirm, insbesondere in Form eines berührungsempfindlichen Bildschirms, also eines Touch-Displays, aufweisen und/oder eine Tastatur oder andere Eingabe-Mittel für Informationen an die Steuerung der Annahme-Station.

Ferner sollte eine solche Bedieneinheit eine Bezahleinheit zum insbesondere bargeldlosen Bezahlen umfassen, beispielsweise ein EC-Terminal oder ein Kreditkarten-Terminal, sowie eine Ausgabevorrichtung, mit dem ein von der Annahme-Station erstellter Annahme-Beleg hinsichtlich der Annahme des Paketes an den Kunden ausgegeben wird, nachdem sich das Paket unwiderruflich in der Paket-Annahme-Station befindet und vom Kunden nicht mehr zurückgehalten oder zurückgezogen werden kann.

Aus den oben dargelegten Gründen sollte die gemeinsame Paket-Annahme-Station eine Waage zum Wiegen des aufgegebenen Paketes, insbesondere unter der Transportvorrichtung im Eingabe-Kanal, besitzen, die natürlich signaltechnisch mit der Steuerung der Annahme-Station verbunden sein sollte.

Ferner können weitere Messvorrichtungen am oder im Eingabe-Kanal vorhanden sein zum Ermitteln der Maße, insbesondere der größten Abmessung, und damit des Volumens oder gar der Form des Paketes. Vor allem bei Kopplung dieser Messvorrichtung mit der gezielten Steuerung der Bewegung der Transportvorrichtung können mittels einfacher Abstandssensoren die vollständigen Abmessungen des Paketes ermittelt werden. So kann z.B. mittels eines Abstandssensors über der Transportvorrichtung nicht nur die Höhe des Paketes bestimmt werden, sondern durch den Abstandssensor auch Anfang und Ende des durchlaufenden Paketes festgestellt werden, und durch die zwischen diesen Zeitpunkten von der Transportvorrichtung zurückgelegte Transportstrecke die Länge des Paketes in Durchlaufrichtung.

Ferner kann ein Positions-Sensor und/oder ein Bewegungs-Sensor vorhanden sein, vorzugsweise im Verlaufe des Eingangs-Kanals. Mittels des Position-Sensors kann ermittelt werden, ob sich das Paket bereits hinter dem Durchgriff-Schutz befindet und damit unwiderruflich in der Annahmestation, woraufhin dem Kunden der Abgabe-Beleg ausgestellt werden kann.

Mittels eines Bewegungs-Sensors kann überprüft werden, ob sich das Paket bewegt in einer Richtung und in einer Geschwindigkeit, die nicht der Richtung oder Geschwindigkeit der Transport-Vorrichtung, auf der es sich befindet, entspricht, beispielsweise, weil der Kunde das Paket bewegt, beispielsweise zurückzuziehen versucht, z.B. mittels einer daran befestigten Schnur. Gerade bei hochpreisigen Inhalten könnte für den Kunden ein Anreiz gegeben sein, einen Aufgabe-Beleg für das Paket zu erhalten, ohne das Paket in die Paket-Annahme-Station gelangen zu lassen.

Ferner kann ein Füllstands-Sensor für den wenigstens einen im Einsatz befindlichen Sammelbehälter vorhanden sein, beispielsweise an der Rückseite der Annahme-Station, etwa an oder unter dem hinteren Ende des Eingabe-Kanals, damit dieser bei vollständiger Füllung vom Personal der Waren-Verkaufs-Station gegen einen leeren ausgetauscht werden kann.

Falls die Pakete bereits an den einzelnen gemeinsamen Paket-Annahme-Stationen nach Logistikern sortiert werden sollen, sollten dort verschiedene, den jeweils einzelnen Paket-Logistikern zugeordnete, Sammelbehälter vorhanden sein und die Annahme-Station sollte eine automatische Weiche zum Zuführen eines Paketes zu dem richtigen Sammelbehälter in Abhängigkeit von der auf dem Paket vorhandenen, erkannten, Logistiker-Kennung umfassen.

Aus den oben angegebenen Gründen kann die Annahme-Station auch automatische Ausgaben für Verpackungsmaterial, insbesondere Packpapier und/oder Klebeband, umfassen, und vorzugsweise auch einen Arbeitstisch, auf dem der Kunde sein mitgebrachtes, noch nicht fertig gestelltes, Paket fertig verpacken kann.

Die sicherheitstechnische Überwachung der Paket-Annahme-Station kann wenigstens eine Kamera umfassen, die die Vorderseite und/oder Rückseite der Paket-Annahme-Station sowie das Umfeld vor der Station filmt und/oder Bewegungsmelder oder Beschleunigungssensoren, die entweder mit einer Sicherheitsfirma oder direkt mit der nächstgelegenen Polizeistation Daten-technisch verbunden ist.

Für den Kunden sollte als Sicherheitsmerkmal ein Notfall-Knopf vorhanden sein, vorzugsweise so nah an der Eingabe-Öffnung, dass er ihn auch noch betätigen kann, während er mit einer Hand das Paket in der Eingabe-Öffnung hält, so dass er mit der anderen Hand gleichzeitig noch den Notfall-Knopf betätigen kann, beispielsweise für den Fall, dass er sich in der Transportvorrichtung oder im Durchgriff-Schutz verfangen haben sollte.

Der Notfall-Knopf ist vorzugsweise signaltechnisch mit dem Personal der Waren-Verkaufs-Filiale und außerhalb deren Öffnungszeiten mit einem Sicherheitsdienst verbunden.

Hinsichtlich der Waren-Verkaufs-Filiale wird diese Aufgabe dadurch gelöst, dass diese eine gemeinsame Paket-Annahme-Station, wie oben beschrieben, mit umfasst.

Dabei kann die Annahme-Station im Inneren des Gebäudes der Waren-Verkaufs-Filiale angeordnet sein, und wenn es dort einen von dem Waren-Verkaufsraum getrennten Rückgabe-Raum, beispielsweise für die Rückgabe von Pfand-Gebinden gibt, vorzugsweise in diesem Rückgabe-Raum.

Die gemeinsame Paket-Annahmestation kann sich jedoch auch in einer Außenwand des Gebäudes befinden, so dass der Kunde zum Benutzen das Gebäude nicht betreten muss.

Die gemeinsame Paket-Annahme-Station kann sich auch als separates Gebäude auf dem Gelände der Waren-Verkaufs-Filiale abseits des Gebäudes der Waren-Verkaufs-Filiale, vorzugsweise jedoch möglichst nahe daran, befinden, da das Gelände ja in aller Regel wesentlich größer ist als das Gebäude der Filiale selbst, da es vor allem eine größere Anzahl von Parkplätzen aufweist.

Insbesondere kann die gemeinsame Paket-Annahme-Station auch als Drive-in-Station auf dem Gelände der Waren-Verkaufs-Filiale ausgebildet sein, so dass man also mit dem Auto so nah an die Eingabe-Öffnung und die entsprechend angeordnete Bedieneinheit heranfahren kann, dass man im Auto sitzend durch das geöffnete Fenster des Fahrer-Sitzes das Paket in die Eingabe-Eröffnung legen kann und die Bedien-Einheit bedienen kann.

Dadurch kann der Kunde das Verlassen seines Fahrzeuges vermeiden, was er vor allem bei Dunkelheit als Sicherheits-Vorteil empfinden wird.

Die sicherheitstechnische Ausstattung der gemeinsamen Paket-Annahme-Station ist vorzugsweise Bestandteil der sicherheitstechnischen Ausstattung der Waren-Verkaufs-Filiale, so dass die Verbindung mit einer Sicherheitsfirma und/oder einer Polizeistation nur einmal benötigt wird.

### c) Ausführungsbeispiele

Ausführungsformen gemäß der Erfindung sind im Folgenden beispielhaft näher beschrieben. Es zeigen:
- **Figur 1a:**: ein Logistik-Schema nach dem Stand der Technik,
- **Figur 1b:**: das erfindungsgemäße Logistik-Schema,
- **Figur 2:**: eine gemeinsame Paket-Annahme-Station in der Frontansicht,
- **Figur 3:**: eine Waren-Verkaufs-Filiale, aufgeschnitten in der Ansicht von oben.

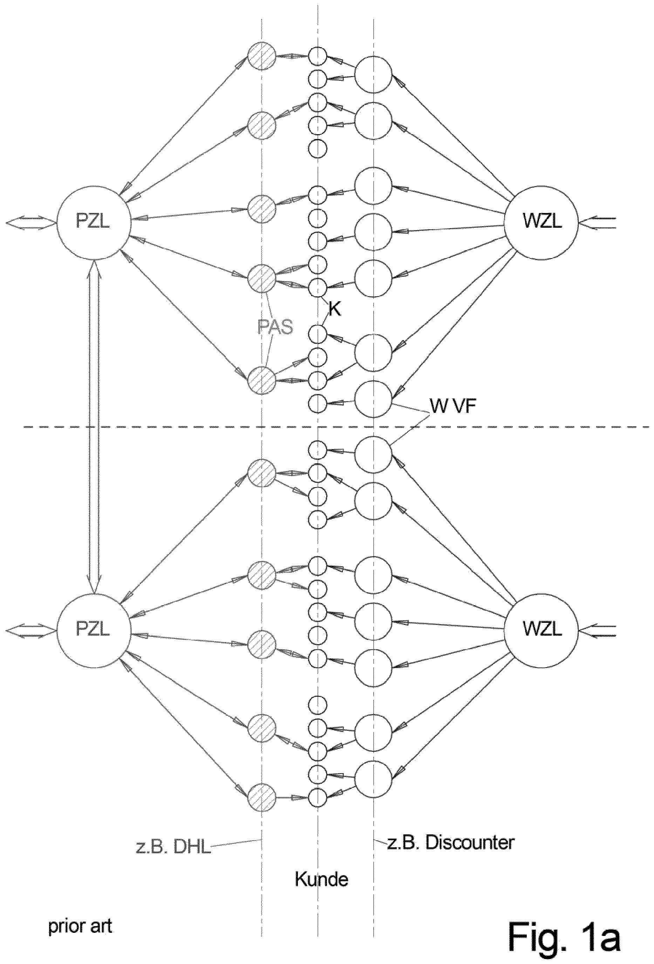

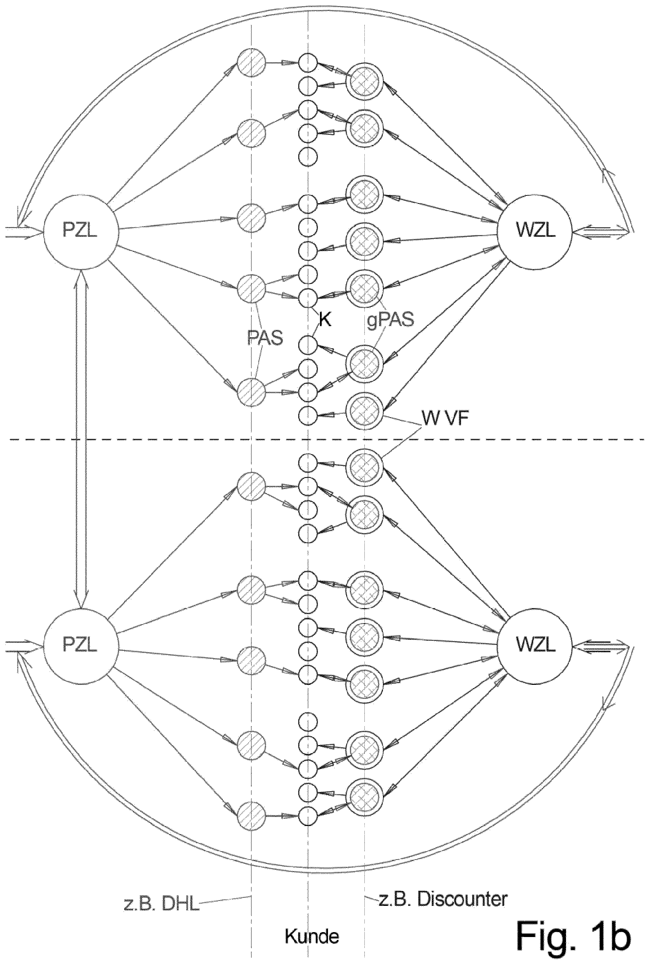

In den **Figuren 1a** **und** **1b** sind
- auf der mittleren senkrechten Linie die potentiellen Kunden K,
- auf der linken senkrechten Linie die - logistikerspezifischen - Paketannahme-Stationen PAS,
- links davon die mit diesen in logistischer Verbindung stehenden Paket-Zentral-Lager PZL,
- auf der rechten senkrechten Linie die Waren-Verkaufs-Filialen WVF,
- rechts davon die mit diesen in logistischer Verbindung stehenden Waren-Zentral-Lager WZL
dargestellt.

Die logistikerspezifischen Paketannahme-Stationen geben die bei ihnen aufgegebenen Pakete, insbesondere Paket-Rückläufer, an das mit ihnen logistisch verbundene, also in der Regel gebietsmäßig zuständige, Paket-Zentrallager PZL weiter, während die vorherige Auslieferung der Pakete an die Kunden nicht zwingend über diese logistikerspezifischen Paketannahme-Stationen erfolgen muss, sondern direkt vom Paket-Zentrallager PZL aus erfolgen kann.

Die Waren-Verkaufs-Filialen WVF werden von den Waren-Zentral-Lagern WZL mit Waren beliefert.

Die gesamte Paket-Logistik ist in Rot dargestellt, die Waren-Logistik in Blau.

Gemäß **Figur 1a** ist der heutige Ablauf folgender:
Ein Kunde erhält ein bestelltes Paket, angeliefert bei ihm zu Hause entweder direkt vom Paket-Zentrallager mittels eines Paket-Lieferwagens, oder von der Paket-Annahme-Station PAS, von der er es sich dann in der Regel selbst abgeholt hat. Gefällt die Ware ganz oder teilweise nicht, erfolgt eine Rücksendung, indem der Kunde den Paket-Rückläufer wieder selbst bei der logistikerspezifischen Paketannahme-Station PAS abgibt und es von dort abgeholt und ins Paket-Zentral-Lager PZL gebracht wird. Von dort wird es in aller Regel zunächst zu einem anderen, dem Empfänger, meist einem Online-Versender, nächstliegenden Paket-Zentrallager PZL verbracht und von dort aus an den Empfänger ausgeliefert.

Einer der Kunden, möglicherweise der gleiche Kunde, der das Paket bestellt und retourniert hatte, kauft des öfteren Waren für seinen täglichen Bedarf in einer Waren-Verkaufs-Filialen WVF ein.

Diese Waren werden mittels Waren-LKWs von einem zuständigen Waren-Zentrallager WZL mit Waren beliefert, wobei diese Waren-LKWs auf der Rückfahrt kaum beladen sind.

**Figur 1b** zeigt den erfindungsgemäßen Ablauf.

Dieser unterscheidet sich von **Figur 1a** dadurch, dass der Kunde K, der auf dem bisher beschriebenen Weg ein bestelltes Paket erhalten hat, dieses aber als Paket-Rückläufer an den ursprünglichen Versender, z.B. den Betreiber des Online-Shops, zurücksenden will, nicht an einer der logistikerspezifischen Paketannahme-Station PAS abgibt, sondern an einer der gemeinsamen Paketannahme-Stationen gPAS, die an oder in den WVF angeordnet sind, abgibt.

Dadurch spart er sich einen Umweg zu der an einem anderen Ort positionierten PAS, und erledigt dies bei seinem täglichen Einkauf, den er ohnehin in einer WVF durchführt.

Die in jeder gPAS, also jeder WVF, aufgegebenen Pakete werden von den dort die Waren anliefernden Waren-LKWs auf ihrer Rückfahrt ins WZL transportiert, wofür auch genug Stauraum im Waren-LKW zur Verfügung steht.

Vorzugsweise erst im WZL werden diese Rückläufer-Pakete sortiert nach den einzelnen Paket-Logistikern und - in der Regel vom entsprechenden Paket-Logistiker selbst - vom WZL abgeholt und meist in das nächstgelegene, eigene PZL transportiert.

Falls der Paket-Logistiker im WZL auch bereits eine Sortierung nach den Empfängern oder den Empfangs-Gebieten dieser Rückläufer-Pakete durchführt, können die entsprechenden Paket-Tranchen bereits gezielt dem jeweils dazu nächstliegenden PZL zugeführt werden.

Die Vorteile dieser Vorgehensweise sind:
- der Kunde spart zusätzlichen Weg und Zeit für das Abgeben des Rückläufer-Paketes in einer logistikerspezifischen PAS,
- dem Kunden stehen die wesentlich längeren und kundenfreundlicheren Öffnungszeiten der WVF statt der kürzeren und bei jedem PAS anderen Öffnungszeiten der verschiedenen PAS zur Verfügung,
- der Betreiber der WVF erhöht dadurch die Kundenbindung,
- der Paket-Logistiker erhält einen Großteil seiner Pakete, insbesondere Rückläufer-Pakete, konzentriert angeboten an relativ wenigen WZLs und spart sich aufwändiges Einsammeln an einer wesentlich größeren Anzahl seiner eigenen PAS.

Mittelfristig kann der Paket-Logistiker sogar auf seine eigenen Paket-Annahme-Station PAS verzichten, vor allem wenn die gemeinsamen Paket-Annahme-Stationen gPAS auch zur Annahme und insbesondere Frankierung von Primär-Paketen ausgerüstet sind.

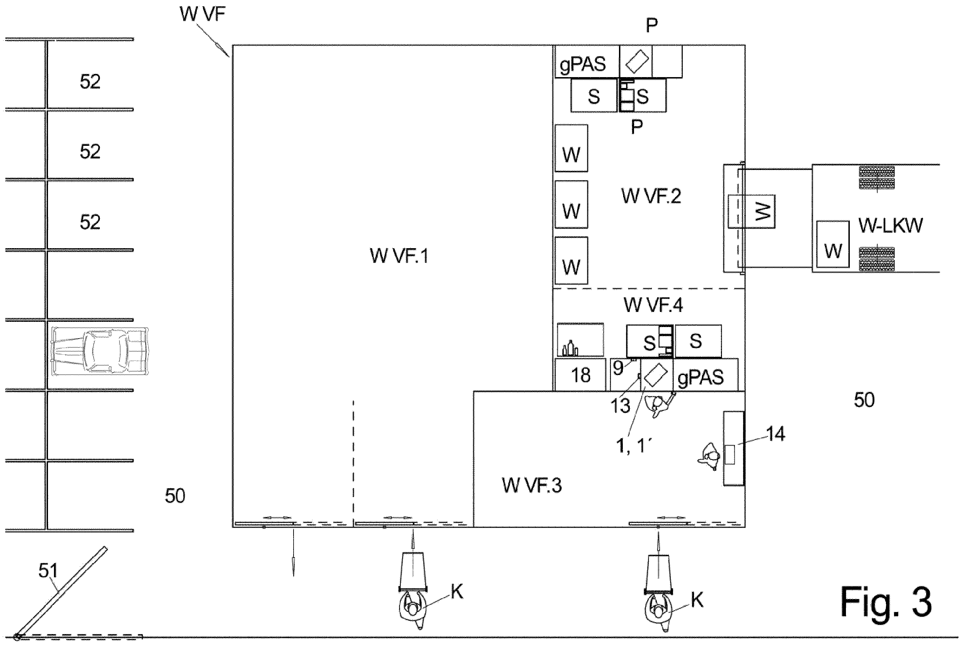

**Figur 3** zeigt zwei mögliche Anordnungen einer gemeinsamen Paket-Annahme Station gPAS in einer Waren-Verkaufs-Filiale WVF:
Das in **Figur 3** in der Aufsicht dargestellte Gelände mit Gebäude einer Waren-Verkaufs-Filiale WVF, welches nicht in realistischer Größenverteilung dargestellt ist, ist unterteilt in den Waren-Verkaufsraum WVF.1 - der in aller Regel den weitaus größten Teil der Grundfläche des Gebäudes der Waren-Verkaufs-Filiale WVF einnimmt - mit einem vorgelagerten Eingangs- und Ausgangsbereich, über den die Kunden K den Waren-Verkaufsraum WVF.1 betreten und verlassen.

Meist neben dem Eingangsbereich, in der Regel jedoch davon getrennt, befindet sich ein Rücknahme-Raum WVF.3, in dem sich ein Rücknahme-Automat 18 für Pfand-Gebinde befindet, in der Regel eingelassen in einer Wand des Rücknahme-Raumes WVF.3, sodass die Rückseite des Rücknahme-Automaten 18 für das Personal der Waren-Verkaufs-Filiale WVF zugänglich ist, vorzugsweise von einem Pfand-Raum WVF.4 aus, der an die Rückseite des Rücknahme-Automaten 18 angrenzt.

Ein Logistik-Raum WVF.2, in dem Paletten oder Rollwägen mit neuer Ware, die von den Waren-LKWs W-LKW angeliefert werden, zwischengelagert werden, bevor sie in den Verkaufsraum WVF.1 gebracht und dort die Waren in die Regale geräumt werden, befindet sich oft neben dem Pfand-Raum WVF.4 und kann in einzelnen Fällen auch mit diesem identisch sein.

In dem Logistik-Raum WVF.2 und/oder dem Pfand-Raum WVF.4 werden oft auch diejenigen Dinge zwischengelagert, die nach dem Abladen der Ware W vom Waren-LKW W-LKW auf diesen aufgeladen werden müssen, damit er sie auf seiner Rückfahrt zum Waren-Zentral-Lager WZL mitnimmt, beispielsweise mit zurückgegebenen Pfand-Gebinden gefüllte Sammelbehälter S, aber auch Waren-Rückläufer und ähnliches.

Die gemeinsame Paket-Annahme-Station gPAS kann als erste Möglichkeit ebenfalls in dem Rücknahme-Raum WVF.3 untergebracht sein, vorzugsweise wiederum eingelassen in eine dortige Wand, vorzugsweise neben dem Pfand-Rücknahme-Automaten 18, sodass auch die Rückseite des gPAS für das Personal von der Rückseite her, nämlich vom Pfand-Raum WVF.4, aus zugänglich ist, beispielsweise zum Entfernen eines mit aufgegebenen Paketen gefüllten Sammelbehälters S von der Rückseite der gemeinsamen Paket-Annahme-Station gPAS und dortiges Abstellen eines neuen, leeren Sammelbehälters S.

Die gemeinsame Paket-Annahme-Station gPAS kann auch in einer Außenwand des Gebäudes der Waren-Verkaufs-Filiale WVF untergebracht sein, vorzugsweise wiederum so, dass die Rückseite der gemeinsamen Paket-Annahme-Station gPAS vom Inneren des Gebäudes, vorzugsweise dem Logistik-Raum WVF.2 aus, für das Personal zugänglich ist.

Die mit Paketen gefüllten Sammelbehälter S werden nach Zwischenlagerung im Logistik-Raum WVF.2 von den Waren-LKWs W-LKW auf ihrer Rückfahrt zum Waren-Zentral-Lager ebenfalls mitgenommen.

Die Eingangstür in den Rücknahme-Raum WVF.3 ist in der Regel nur zu den gleichen Zeiten geöffnet wie der Eingang zum Waren-Verkaufsraum WVF.1.

Das Gelände 50, auf dem die Waren-Verkaufs-Filiale WVF steht, ist in der Regel umfriedet, also beispielsweise eingezäunt, und die Zufahrt in das Gelände 50, auf dem sich auch die Parkplätze 52 für die Kunden K befinden, ist in aller Regel durch eine Zugangsbeschränkung wie etwa eine Schranke 51 verschließbar. Die Kunden K haben also zu einer gemeinsamen Paket-Annahme-Station gPAS, die im Rücknahme-Raum WVF.3 untergebracht ist, normalerweise nur Zugang zu den Öffnungszeiten der Waren-Verkaufs-Filiale WVF, es sei denn, dass man die Eingangstür zum Rücknahme-Raum WVF.3 länger offen lassen würde als den Zugang zu dem Waren-Verkaufs-Raum WVF.1.

Ist die gemeinsame Paket-Annahme-Station gPAS dagegen in einer Außenwand des Gebäudes der Waren-Verkaufs-Filiale WVF - oder gar in einem separaten Gebäude auf dem Gelände 50 der Waren-Verkaufs-Filiale WVF - untergebracht, so eröffnet dies die Möglichkeit, die Zugangsbeschränkung, etwa die Schranke 51, länger offen zu lassen als die Öffnungszeiten des Waren-Verkaufsraumes WVF.1 der Waren-Verkaufs-Filiale WVF, und dadurch dem Kunden K einen noch zeitlich längere Nutzung der gemeinsamen Paket-Annahme-Station gPAS zu ermöglichen als die Öffnungszeiten des Waren-Verkaufsraumes WVF.1.

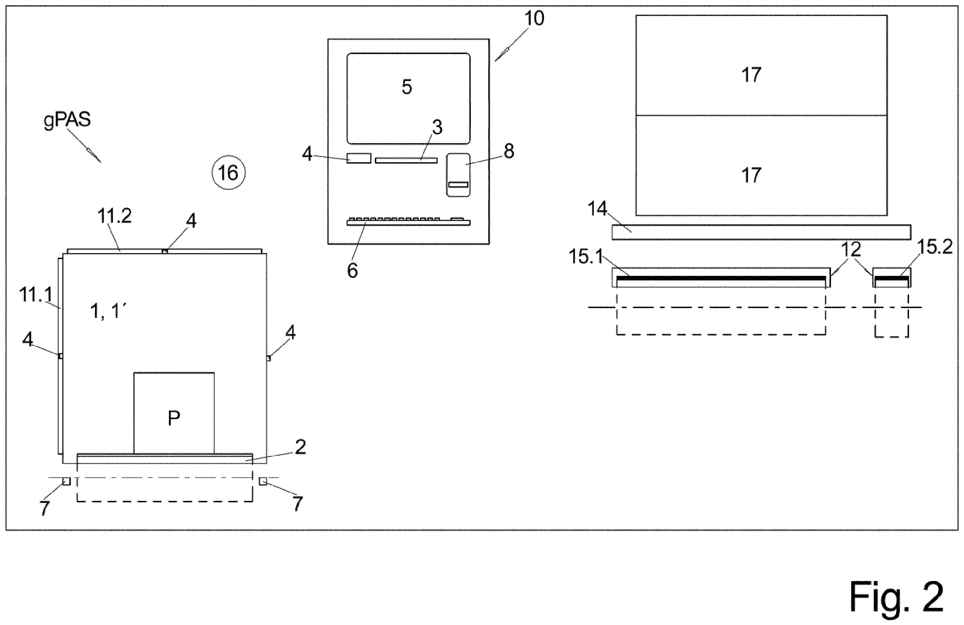

**Figur 2** zeigt beispielhaft eine Frontansicht einer gemeinsamen Paket-Annahme-Station gPAS, wie sie der Kunde K bei Benutzung vor sich sieht:
Diese umfasst zum einen die Eingabe-Öffnung 1, an die sich in Blickrichtung der **Figur 2** ein Eingabe-Kanal 1' anschließt, und in den der Kunde K sein aufzugebendes Paket P legt, und zwar auf eine in diesem Eingabe-Kanal 1' in Blickrichtung nach hinten laufende Transportvorrichtung 2 in Form eines Förderbandes.

Daneben befindet sich eine Bedien-Einheit 10 mit einem Bildschirm, also Display 5, der meist als berührungsempfindlicher Bildschirm ausgebildet ist, sowie einer Tastatur 6. Die Bedien-Einheit 10 umfasst ferner in aller Regel eine - in der Regel bargeldlos funktionierende - Bezahleinheit 8, beispielsweise ein EC- und/oder Kreditkarten-Terminal 8 zum Eingeben einer Karte sowie einen Beleg-Erzeuger 3, über den der Kunde nach Aufgeben seines Paketes P einen Aufgabe-Beleg ausgegeben erhält.

Vorzugsweise ist an der Bedieneinheit 10 ferner ein Scanner 4, beispielsweise in Form eines QR-Code-Lesers oder Bar-Code-Lesers, vorhanden, um den auf Begleitpapieren des Paketes P, beispielsweise einem Rücksende-Auftrag des Logistikers, befindlichen QR-Code oder Bar-Code lesen zu können.

Auch die nicht dargestellte Steuerung der gesamten gemeinsamen Paket-Annahme-Station gPAS ist vorzugsweise im Gehäuse der Bedieneinheit 10, insbesondere von deren Rückseite her zugänglich, geschützt untergebracht.

Ferner ist an der gemeinsamen Paket-Annahme-Station gPAS ein Notfall-Knopf 16 vorhanden, entweder als Bestandteil der Bedien-Einheit 10 oder separat an auffälliger Stelle, auch in der Nähe der Eingabe-Öffnung 1, den der Kunde K betätigen kann, wenn beispielsweise eine Fehlfunktion der gemeinsamen Paket-Annahme-Station gPAS beim Aufgeben des Paketes P eintritt, und mit der er Personal der Waren-Verkaufs-Filiale WVF alarmieren kann.

Der Eingabe-Kanal 1' kann weitere Austattungs-Merkmale aufweisen, die für den Betreiber der gemeinsame Paket-Annahme-Station gPAS die Handhabung der Pakete P erleichtert:
Da zum einen das Gewicht des Paketes P von Interesse ist, kann eine Waage 7 eingebaut sein, vorzugsweise in Wirkverbindung mit dem Förderband 2, welche das darauf abgelegte Paket P beim Abtransport in den Eingabe-Kanal 1' hinein und durch diesen hindurch bis es in den Sammelbehälter S fällt - wie in **Figur 3** erkennbar - wiegt.

Da auch die Abmessungen der einzelnen Pakete von Interesse sind, kann hierfür eine automatische Messvorrichtung vorhanden sein, in diesem Fall aufgeteilt in eine erste Messvorrichtung 11.1, die sich in einer Seitenwand des Eingabe-Kanals 1' über dessen gesamte Höhe erstreckt, und die Höhe des Paketes P ermittelt sowie eine zweite Messvorrichtung 11.2, die sich in der Decken-Wand des Eingabe-Kanals 1' im Wesentlichen über dessen gesamte Breite erstreckt und die Breite des Paketes P ermittelt.

Wenn die Ermittlung der Höhe und Breite während der Bewegung des Paketes P durch den Eingangs-Kanal 1' erfolgt, kann eine der beiden Messvorrichtungen 11.1, 11.2 auch so ausgebildet sein, dass damit der Anfang und das Ende des Paketes P während des Durchlaufs und damit die Länge des Paketes P in Blickrichtung der **Figur 2** ermittelt wird.

Nur an einer oder auch an mehreren der Umfangswände des Eingangs-Kanals 1' kann ferner ebenfalls ein Scanner 4 angeordnet sein, um Markierungen auf einer der Außenseiten des Paketes P, insbesondere QR-Codes, Bar-Codes oder andere Markierungen, die insbesondere den Paket-Logistiker identifiziert, der dieses Paket P befördern muss.

Für den Fall, dass ein Kunde K die gemeinsame Paket-Annahme-Station gPAS mit einen Paket P erreicht, welches noch nicht vollständig verschlossen oder verpackt ist, wird dem Kunden K das hierfür notwendige Equipment zur Verfügung gestellt in Form einerseits eines Arbeitstisches 14, wie auch in **Figur 2** **und** **3** eingezeichnet oder einer ausklappbaren oder - insbesondere aus der gPAS, bevorzugt deren Eingabeöffnung - ausziehbaren Arbeitsplatte, Spendern für Verpackungsmaterial 15 wie etwa Packpapier 15.1 und Klebeband 15.2, die aus einem entsprechenden Entnahmeschlitz von einer dahinter liegenden VorratsRolle abgezogen und nach Abtrennen entnommen werden können zum fertigen Verpacken des Paketes P.

Falls die gemeinsame Paket-Annahme-Station gPAS zusätzlich die Funktion einer Paket-Ausgabe erfüllen soll, kann die gemeinsame Paket-Annahme-Station gPAS für diesen Zweck verschließbare Ausgabefächer 17 aufweisen, von denen in **Figur 2** nur zwei Stück dargestellt sind, und die von der Rückseite her von dem Personal der Waren-Verkaufs-Filiale WVF mit jeweils einem abzuholenden Paket gefüllt werden, sodass nach Eingabe bestimmter Berechtigungsdaten durch den Kunden K an der Bedieneinheit 10 dem Kunden K die Tür in der Frontseite des Ausgabefachs 17 in der Frontseite der gemeinsamen Paket-Annahme-Station gPAS geöffnet wird, sodass er sein darin befindliches Paket P entnehmen kann.

Alternativ kann dem Kunden K sein Paket P auch über den Eingabe-Kanal 1' ausgegeben werden, der dann als Ausgabe-Kanal funktioniert, indem die Transport-Vorrichtung wie das Förderband 2 in Richtung zur Öffnung 1 hin angetrieben wird, nachdem vorher automatisch aus einem nicht dargestellten Speicher für hinterlegte Pakete das richtige, dem Kunden K zustehende, Paket P von der Rückseite der gemeinsamen Paket-Annahme-Station gPAS her auf das Förderband 2 aufgelegt und zum Kunden K nach vorne gefahren wird.

### BEZUGSZEICHENLISTE

- 1: Eingabe-Öffnung
- 1': Eingabe-Kanal
- 2: Transportvorrichtung, Förderband
- 3: Beleg-Erzeuger
- 4: Scanner
- 5: Display
- 6: Tastatur, real oder virtuell im Display eingeblendet
- 7: Waage
- 8: Bezahleinheit
- 9: Füllstands-Sensor
- 10: Bedieneinheit
- 11: Messvorrichtung
- 11.1, 11.2: Messvorrichtung
- 12: Ausgabeeinheit (für Verpackungsmaterial)
- 13: Positions-Sensor, Bewegungs-Sensor
- 14: Arbeitstisch
- 15: Verpackungsmaterial
- 15.1: Packpapier
- 15.2: Klebeband
- 16: Notfall-Knopf
- 17: Ausgabefach
- 18: Pfandbehälter-Rücknahme-Automat, Rücknahme-Automat
- K: Kunde
- P: Paket
- PAS: Paketannahme-Station
- gPAS: gemeinsamen Paketannahme-Station
- PL: Paket-Logistiker
- PZL: Paket-Zentral-Lager
- S: Sammelbehälter
- W: Ware
- W-Lkw: Waren-LKW
- WVF: Waren-Verkaufs-Filiale
- WVF.1: Verkaufs-Raum
- WVF.2: Logistik-Raum
- WVF.3: Rückgabe-Raum
- WVF.4: Pfand-Raum
- WZL: Waren-Zentral-Lager

## Patentansprüche

1. **Verfahren** zur logistischen Handhabung von zu versendenden Paketen (P) und von Waren-Verkaufs-Filialen (WVF) zu verkaufenden Waren (W), indem
A) Waren (W) von einem Waren-Zentral-Lager (WZL) an die Waren-Verkaufs-Filialen (WVF) in ihrem Verteil-Gebiet transportiert werden mittels Waren-Lkw's,
B) insbesondere leere Verpackungen von den Waren-LKW's auf der Rückfahrt von den Waren-Verkaufs-Filialen (WVF) zum Waren-Zentral-Lager (WZL) transportiert werden,
a) Pakete (P), insbesondere Rückläufer-Pakete (P), von den Kunden (K) an automatisierten oder manuellen Paketannahme-Stationen (PAS) aufgegeben werden und
b) von dort zu einem Paket-Zentral-Lager (PZL) eines Paket-Logistikers (PL) transportiert werden,
**dadurch gekennzeichnet, dass**
- die, insbesondere frankierten, Pakete (P) vom Kunden (K) an jeweils einer, insbesondere automatisierten, gemeinsamen Paket-Annahme-Station (gPAS) aufgegeben werden,
- die zur Annahme für mehrere verschiedene Paket-Logistiker (PL) ausgebildet sind und
- die an oder in den Waren-Verkaufs-Filialen (WVF) positioniert sind,
- die Pakete (P) sortiert werden zumindest nach den verschiedenen Paket-Logistikern (PL) und
- an die einzelnen Paket-Logistiker (PL) übergeben werden,
- zu den Paket-Zentral-Lagern (PZL) der einzelnen Paket-Logistiker (PL) transportiert werden.
(Pakete über Waren-Zentral-Lager WZL:)

2. Verfahren nach Anspruch 1,
**dadurch gekennzeichnet, dass**
- die Pakete (P) von den Waren-Verkaufs-Filialen (WVF) zum Waren-Zentral-Lager (WZL) transportiert werden insbesondere mittels der Waren-Lkw's auf deren Rückfahrt,
- die Pakete (P) spätestens dort sortiert werden, zumindest nach Paket-Logistikern (PL) und
- die logistiker-spezifisch sortierten Pakete (P) vom Waren-Zentral-Lager (WZL) zum Paket-Zentral-Lager (PZL) transportiert werden insbesondere mittels Paket-Lkw's, insbesondere durch den Paket-Logistiker.
(Pakete ab WVF durch Logistiker:)

3. Verfahren nach Anspruch 1,
**dadurch gekennzeichnet, dass**
- die Pakete (P) in den Waren-Verkaufs-Filialen (WVF) sortiert werden, zumindest nach Paket-Logistikern (PL) und
- die logistiker-spezifisch sortierten Pakete (P) von der Waren-Verkaufs-Filiale (WVF) zum Paket-Zentral-Lager (PZL) transportiert werden, insbesondere mittels Paket-Lieferwägen oder Paket-Lkw's.
(Abgabe-Beleg:)

4. Verfahren nach einem der vorhergehenden Ansprüche,
**dadurch gekennzeichnet, dass**
nach dem Aufgeben des Paketes (P) in der gemeinsamen Paketannahme-Station (gPAS) an den Kunden (K) automatisch ein Abgabe-Beleg in Papierform oder online ausgegeben wird, auf dem vermerkt ist
- der Abgabe-Zeitpunkt,
und/oder
- der auf dem Paket (P) angegebene Paket-Logistiker (PL),
und/oder
- eine Sendungs-Kennung, mit deren Hilfe die online-Nachverfolgung des Paketes (P) durch den Kunden möglich ist.
(Erfassen + Auswerten:)

5. Verfahren nach einem der vorhergehenden Ansprüche,
**dadurch gekennzeichnet, dass**
die auf dem Paket (P), insbesondere auf dessen Etikett, vorhandenen Paket-Informationen bei Eingabe in die gemeinsame Paketannahme-Station (gPAS) automatisch gescannt werden und
- das Paket (P) automatisch einem Sammelbehälter (S) für den dabei ermittelten Paket-Logistiker (PL) zugeführt wird,
und/oder
- der Paket-Logistiker (PL), insbesondere just-in-time, über die Anzahl der in jeder Waren-Verkaufs-Filiale (WVF) oder in dem Verteil-Bereich eines Waren-Zentral-Lagers (WZL) abgegebenen Pakete (P) informiert wird,
- insbesondere aufgeteilt nach Empfängern,
- insbesondere unter Angabe der Sendungs-Kennung des spezifischen Paketes (P),
und/oder
- die Paket-Rückläufer (Pr) des Verkaufs-Filialen-eigenen online-Shops ermittelt werden und dieser zeitnah informiert wird über die Anzahl der vorliegenden Rücksendungen, insbesondere unter Angabe der Sendungs-Kennung des spezifischen Paketes (P).

6. Verfahren nach Anspruch 5,
**dadurch gekennzeichnet, dass**
- von dem Paket (P) bei Eingabe in die gemeinsame Paketannahme-Station (gPAS) automatisch
- das Gewicht,
und/oder
- die Maße, insbesondere die maximale Abmessung,
und/oder
- die Form
ermittelt wird,
und/oder
- dem Paket-Logistiker (PL), insbesondere just-in-Time, diese Informationen zusätzlich übermittelt werden.
(Frankieren:)

7. Verfahren nach einem der vorhergehenden Ansprüche,
**dadurch gekennzeichnet, dass**
die Pakete (P) an oder in der Paketannahme-Station (gPAS) hinsichtlich der Versandkosten bezahlt, insbesondere frankiert, werden,
- insbesondere die Versandkosten, bevorzugt bargeldlos, vom Kunden (K) an der Paketannahme-Station (gPAS) oder, insbesondere vorher, online entrichtet werden,
und/oder
- insbesondere nach Auswahl des gewünschten Paket-Logistikers (PL) durch den Kunden (K), was spätestens an der Paketannahme-Station (gPAS) erfolgt.

8. Verfahren nach Anspruch 7,
**dadurch gekennzeichnet, dass**
falls auf dem eingegebenen Paket (P) noch kein Paket-Logistiker (PL) bindend angegeben ist
- dem Kunden für den Versand dieses Paketes die von den verschiedenen an der gemeinsamen Paket-Annahme-Station (gPAS) zur Verfügung stehenden Paket-Logistikern (PL) jeweils anfallenden Versandkosten, insbesondere auch die Transportzeit bis zur Auslieferung an den Empfänger, mitgeteilt werden,
- der Kunde einen dieser Paket-Logistiker auswählt.
(Verpacken:)

9. Verfahren nach einem der vorhergehenden Ansprüche,
**dadurch gekennzeichnet, dass**
dem Kunden (K) an der Paket-Annahmestation (gPAS) Verpackungsmaterial (15), insbesondere Klebeband (15.2) und/oder Packpapier (15.1) und/oder Faltkartons, zur Selbstbedienung, kostenlos oder gegen Bezahlung, in letzterem Fall durch automatische Ausgabe nach Bezahlung, zur Verfügung gestellt werden.
(Plausibilitätskontrolle:)

10. Verfahren nach einem der vorhergehenden Ansprüche,
**dadurch gekennzeichnet, dass**
- beim Entnehmen eines gefüllten Sammelbehälters (S) aus der Paketannahme-Station (gPAS) wenigstens eine Plausibilitätskontrolle hinsichtlich der Füllung des Sammelbehälters (S) durchgeführt wird,
- insbesondere das Gewicht und/oder Volumen der im Sammelbehälter (S) befindlichen Füllung aus Paketen (P) verglichen wird mit dem Gewicht und/oder Volumen der an der Paketannahme-Station (gPAS), insbesondere für diesen Sammelbehälter (S), angenommenen Pakete (P),
- bei negativem (definieren) Ergebnis des Vergleichs ein Alarmsignal an das für die Paketannahme-Station (gPAS) zuständige Personal abgegeben wird.
(gPAS absichern:)

11. Verfahren nach einem der vorhergehenden Ansprüche,
**dadurch gekennzeichnet, dass**
- die Paketannahme-Station (gPAS) sicherheitstechnisch überwacht wird,
- insbesondere signaltechnisch automatisch mit der nächstgelegenen Polizei-Station verbunden ist.
(Weiterbildung als Donation-Annahme-Station:)

12. Verfahren nach einem der vorhergehenden Ansprüche,
**dadurch gekennzeichnet, dass**
- der Kunde (K) ein oder mehrere Waren (W) in die Eingabe-Öffnung (1) einlegt und an der Bedieneinheit (10) diese Ware (W) als Spende für die Tafeln deklariert,
oder
- der Kunde (K) ein oder mehrere Waren (W) an der Bedieneinheit (10) als Spende für die Tafeln beauftragt und bezahlt,
- die eingegebene oder beauftragte Ware (W) daraufhin, insbesondere automatisch, einem Spenden-Behälter für die Tafeln, der vorzugsweise im Logistik-Raum (WVF.2) steht, zugeführt wird.
(Weiterbildung als Ausgabe-Station:)

13. Verfahren nach einem der vorhergehenden Ansprüche,
**dadurch gekennzeichnet, dass**
an den Kunden (K) ein Paket (P) automatisch ausgegeben wird, insbesondere durch Öffnen eines Ausgabe-Faches (17), in dem sich das Paket (P) befindet,
- insbesondere eines Paketes (P), welches eine von dem Kunden zuvor in der betreffenden Waren-Verkaufs-Filiale (WVF) gekauftes und bezahltes, meist hochpreisiges, Produkt enthält,
und/oder
- insbesondere eines von einem Paket-Logistiker (PL) an die Paket-Annahmestation für den Kunden angelieferten Paketes (P).

14. **Paket-Annahme-System** mit wenigstens einer gemeinsamen **Paket-Annahme-Station** (gPAS),
wobei die gemeinsame Paketannahme-Station (gPAS) umfasst
- eine Eingabe-Öffnung (1), insbesondere einen sich daran anschließenden Eingabe-Kanal (1'),
- mindestens einen Sammelbehälter (S) für die Pakete (P),
- eine interne Transportvorrichtung (2), insbesondere eine Rutsche oder ein Transportband (2), von der Eingabe-Öffnung (1) zu dem Sammelbehälter (S),
- einen Beleg-Erzeuger (3) zum Erzeugen eines Abgabe-Beleges,
wobei das Paketannahme-System umfasst
- einen Scanner (4) zum Lesen der auf dem Paket (P), insbesondere auf dessen Etikett, angegebenen Paket-Informationen,
**dadurch gekennzeichnet, dass**
der Scanner (4) ausgebildet ist zum Lesen der auf dem Paket (P) vorhandenen Logistiker-Kennung, insbesondere eine QR-Codes oder Barcodes, eines von mehreren spezifischen Paket-Logistikern (PL).
(Ausstattung gPAS:)

15. Paketannahme-Station nach Anspruch 14,
**dadurch gekennzeichnet, dass**
die gemeinsame Paketannahme-Station (gPAS) umfasst
- den Scanner (4),
und/oder
- eine Waage (7) zum Wiegen des Paketes (P),
und/oder
- eine bargeldlose Bezahleinheit (8), insbesondere ein EC-Terminal (8), und/oder
- einen Füllstands-Sensor (9) für den wenigstens einen Sammelbehälter (S).

16. Paketannahme-Station nach Anspruch 14 oder 15,
**dadurch gekennzeichnet, dass**
die gemeinsame Paketannahme-Station (gPAS) umfasst
- eine Messvorrichtung (11) zum Ermitteln der Maße, insbesondere der größten Abmessung, und/oder der Form des Paketes (P),
und/oder
- eine Bedieneinheit (10) mit einem Bildschirm (5), insbesondere einen Touch-Display (5),
und/oder
- einen Durchgriff-Schutz hinter der Eingabe-Öffnung (1), insbesondere am Beginn eines dahinter beginnenden Eingabe-Kanals (1'),
und/oder
- eine Ausgabe-Einheit (12) für Verpackungsmaterial (15),
und/oder
- einen Positions-Sensor (13) und/oder Bewegungs-Sensor (13) für das Ermitteln der Position und/oder Bewegung eines in dem Eingabe-Kanal (1') befindlichen Paketes (P).

17. Paketannahme-Station nach einem der Ansprüche 14-16, **dadurch gekennzeichnet, dass**
- mehrere, verschiedenen Paket-Logistikern zugeordnete, Sammelbehälter (S) für Pakete (P) vorhanden sind,
- wenigstens eine automatische Weiche zum automatischen Zuführen eines Paketes (P) zu einem logistikerspezifischen Sammelbehälter (S) in Abhängigkeit von der gescannten Logistiker-Kennung vorhanden ist,
und/oder
- der Scanner (4) ausgebildet ist zum Lesen der auf dem Paket (P), insbesondere auf dessen Etikett, vorhandenen Empfänger-Kennung eines spezifischen Empfängers, insbesondere eines online-Versenders.
(Sicherheit:)

18. Paketannahme-Station nach einem der Ansprüche 14-17,
**dadurch gekennzeichnet, dass**
ein sicherheitstechnisches Überwachungs-System für die Paket-Annahme-Station (gPAS) vorhanden ist, welches insbesondere umfasst
- wenigstens eine Kamera, insbesondere gekoppelt mit einem Bewegungsmelder, welche zumindest die Bedienungs-Seite der Paketannahme-Station (gPAS) sowie deren Umfeld filmt,
und/oder
- einen Notfall-Knopf (16), der bei Auslösung das für das Betreiben dieser Paketannahme-Station (gPAS) zuständige Personal informiert,
und/oder
- eine automatische, signaltechnische Verbindung zur nächstgelegenen Polizei-Station.

19. **Waren-Verkaufs-Filiale** (WVF),
**dadurch gekennzeichnet, dass**
die Waren-Verkaufs-Filiale (WVF) eine gemeinsame Paket-Annahme-Station (gPAS) nach einem der vorhergehenden Ansprüche 14 - 18 umfasst.
(Positionierung:)

20. Waren-Verkaufs-Filiale nach Anspruch 19, welche umfasst
- ein Hauptgebäude mit einem Verkaufs-Raum (WVF.1) für Waren darin,
- einen, insbesondere demgegenüber abtrennbaren, Rückgabe-Raum (WVF.3) mit mindestens einer Verpackungs-Rückgabevorrichtung (18), insbesondere einem Pfandbehälter-Rückgabeautomaten (18), darin
**dadurch gekennzeichnet, dass**
die Paketannahme-Station (gPAS) angeordnet ist
- im Rückgabe-Raum (WVF.3),
und/oder
- von außerhalb des Hauptgebäudes zugänglich in einer Außenwand des Hauptgebäudes,
und/oder
- nahe am Hauptgebäude,
und/oder
- als Drive-in-Station ausgebildet ist.
(Sicherheit:)

21. Waren-Verkaufs-Filiale nach einem der Ansprüche 19 - 20,
**dadurch gekennzeichnet, dass**
- ein sicherheitstechnisches Überwachungs-System für die Waren-Verkaufs-Filiale (WVF) vorhanden ist, welches insbesondere das sicherheitstechnische Überwachung-System für die Paketannahme-Station (gPAS) mit umfasst,
- insbesondere den örtlichen Bereich der Paketannahme-Station (gPAS) mit umfasst.
